# EUROPEAN PATENT SPECIFICATION

(11) **EP 3 080 053 B1**
(45) Date of publication and mention of the grant of the patent: **15.08.2018**
(21) Application number: 14837039.8
(22) Date of filing: 10.12.2014
(51) Int. Cl.: C04B 28/08, C04B 7/153, C04B 7/17

(54) **IMPROVED ALKALINE-ACTIVATED SLAG (AAS) COMPOSITION**
VERBESSERTE ALKALIN-AKTIVIERTE SCHLACKENZUSAMMENSETZUNG
COMPOSITION DE LAITIER À ACTIVATION ALCALINE (AAS) AMÉLIORÉE

(30) Priority: 11.12.2013 ZA 201309311
(43) Date of publication of application: 19.10.2016
(73) Proprietor: University of Pretoria, 0002 Pretoria (ZA)
(72) Inventor: KEARSLEY, Elizabeth Paulina, 0081 Pretoria (ZA); KOVTUN, Maxim Nikolaevich, 0083 Pretoria (ZA)
(74) Representative: Michalski Hüttermann & Partner Patentanwälte mbB
(86) International application number: PCT/IB2014/066760
(87) International publication number: WO 2015/087255

(56) References cited:
- EP-A1- 0 619 276
- EP-A2- 2 514 727
- WO-A1-92/06048
- US-A1- 2012 152 153
- US-A1- 2013 059 099
- CHEMICAL ABSTRACTS, vol. 114, no. 6, 11 February 1991 (1991-02-11), Columbus, Ohio, US; abstract no.: 6001, OTSUKA TETSUO; SHIRASAWA MINORU; NAKANISHI YASUYUKI: "BINDING MATERIAL", XP00186449 & JP H02 141453 A (DENKI KAGAKU KOGYO KK) 30 May 1990 (1990-05-30)
- ZIVICA V: "High effective silica fume alkali activator", BULLETIN OF MATERIALS SCIENCE, INDIAN ACADEMY OF SCIENCES, IN, vol. 27, no. 2, 1 April 2004 (2004-04-01), pages 179-182, XP002527133, ISSN: 0250-4707, DOI: 10.1007/BF02708502
- COLLINS: "Early age strength and workability of slag pastes activated by NaOH and Na2CO3", CEMENT AND CONCRETE RESEARCH, vol. 28, no. 5, 1 January 1998 (1998-01-01), page 655, XP055001521, ISSN: 0008-8846

## Description

### TECHNICAL FIELD

The present invention relates to an improved alkaline-activated slag (AAS) composition. In particular, the present invention relates to the use of a source of an alkali metal carbonate in order to produce an improved composition for ready-to-use alkaline-activated slag, and to the use of additional accelerating admixtures to counter initial slow strength development of said alkaline-activated slag during hardening. The present invention further relates to a method for preparing a dry mixed ready-to-use alkaline-activated slag composition.

### BACKGROUND ART

Conventionally, Ordinary Portland Cement (OPC) functions as a binder for concrete mixtures. During the manufacturing process of OPC, limestone is decomposed to calcium oxide, which releases large amounts of CO₂-emmissions into the atmosphere.

Alkaline-activated slag cement has been used for over 70 years but during the last decade, said cement has been studied intensively. Alkaline-activated slag cement has been shown to produce less CO₂-emmissions relative to OPC, thus the need for alternative cement compositions is driven in part at least by the need of human society to reduce CO₂-emmissions. Additionally, due to the fact that slag originates as a waste product during blast furnace usage in the ironworks industry, the recovery of such slag reduces landside waste and further provides a cost effective substitute for conventional cement.

AAS cement is considered a possible alternative to OPC. AAS cement is most commonly produced by adding an alkali component to slag in an aqueous solution. Alternative methods include dry mixing an alkali powder with a powdered slag or by dry mixing and grinding an alkali powder or alkali pellets together with slag, usually in a ball mill.

The art teaches of four main alkali activators commonly used to activate slag. These activators include sodium silicate, sodium hydroxide, sodium sulphate and sodium carbonate. Sodium silicate and sodium hydroxide or combinations thereof are conventionally considered to be activators for alkaline-activated slag concrete. These conventional activators, however, have several shortcomings such as the high hygroscopicity of sodium hydroxide and the poor solubility of sodium silicate as well as possible absorption of moisture by sodium silicate solids.

Sodium silicates provide high strength and chemical resistance, but their usage is associated with high shrinkage, challenging rheology of fresh concrete mix, relatively high cost of the resultant concrete and high amounts of associated CO₂-emissions. Sodium silicate and a combination thereof with sodium hydroxide provide fast setting, resulting in limited time for casting and finishing of AAS concrete.

As mentioned above, sodium hydroxide is another commonly used activator, but its use for slag activation is associated with shortcomings such as relatively low strength, high porosity and coarse pore structure. Sodium hydroxide in solution has the highest pH value amongst the activators. It is therefore highly corrosive, and safety during production of AAS concrete is a concern.

Sodium sulphate is considered to be the cheapest amongst the four above-identified activators used for AAS concrete however sodium sulphate provides the lowest strength of all of the said activators, especially at an early age during hardening of the concrete, as well as poor resistance to frost and carbonation.

Sodium carbonate is reported to provide high strength, good durability, long setting times and the lowest shrinkage amongst all of the said activators. Sodium carbonate solution is far less corrosive than sodium silicate or sodium hydroxide, making for safer work environments. However, a major shortcoming of sodium carbonate as an activator is the slow strength development of AAS concrete containing acid or neutral slag hardened at ambient temperature.

The closest prior art that the Applicant is aware of is a publication to Douglas and Bradstetr, (1990) [1] wherein a combination of silica fume and slaked lime is used in AAS concrete to promote early strength development. This publication discloses the use of high levels of readily available reactive sodium silicate, present from the beginning of the hardening mechanism, to study the initial hardening mechanism of the slag cement. Due to the hygroscopicity and slow rate of dissolution of the sodium silicate, it will be appreciated that sodium silicate slag compositions, as described in said publication, would not be able to be used for the production of a dry mixed powder cement.

For the purposes of the present specification, the term "slag" denotes a stony waste matter separated from metals during the smelting or refining of ore.

The term "cement" is understood as meaning a powdery substance made for use in making mortar or concrete.

For the purposes of the present specification, the term "non-aqueous" is understood as meaning a substance in a solid form, which is not dissolved or dispersed in an aqueous solution. The solid form may include a powder, flakes, granules or the like.

For purposes of the present invention, the term mixing is understood as any form of mixing and may include milling or grinding of substances in solid form.

US 2013059099 A1 describes a cement-free alkali-activated binder having a combination ratio, which can improve the compressive strength of mortar and concrete in which the cement-free alkali-activated binder is used as a binding material instead of cement, and which can solve the low field applicability of mortar and concrete in terms of quick setting characteristics, fluidity loss, economic efficiency and the like, and to mortar or concrete comprising the same.

In view of the foregoing discussion, there is thus a clear need in the art for an improved alkaline-activated slag composition that does not suffer from the disadvantages and shortcomings associated with conventional cement compositions and the teachings of prior art. The present invention thus aims to solve said disadvantages and shortcomings in the prior art by providing a novel alkaline-activated slag composition and a novel process for the preparation of a dry mixed ready-to-use alkaline-activated slag composition, thereby achieving a reduction in initial water demand and an increase in final strength of the hardened concrete. Additionally, the novel composition counteracts initial slow strength development associated with neutral and acid slag cement at ambient temperature hardening.

### DISCLOSURE OF THE INVENTION

The invention is defined by the features of the independent claims. Preferred embodiments are defined by the features of the dependent claims.

According to a first aspect of the invention, there is provided an alkaline-activated slag composition, which includes:
a source of slag;
a source of an alkali metal carbonate comprising 0.5 to 6.0 in the metal oxide equivalent (i.e. Na₂O for Na₂CO₃) weight % of the source of slag;
a silica fume comprising 0.5 to 5 weight % of the source of slag; and
a slaked lime comprising 0.5 to 5 weight % of the source of slag.

The present invention provides for the alkaline-activated slag composition, as disclosed herein, for use as a ready-to-use alkaline-activated slag.

The alkaline-activated slag composition of the present invention may additionally further include a plasticizer. In an embodiment of the invention, the source of the plasticizer may be a non-aqueous plasticizer. In yet another embodiment of the invention, the plasticizer may be sodium lignosulfonate. The sodium lignosulfonate may comprise 0.1 to 3.0 weight % of the source of slag.

In one embodiment of the invention, the source of slag may be a granulated blast-furnace slag (GBFS). The slag may be characterized in accordance with the chemical composition as presented in Table 1. As can be observed from this Table, the basicity coefficient (K_{b}=(CaO+MgO)/(SiO₂+Al₂O₃)) is 0.92, the activity coefficient (Kₐ=Al₂O₃/SiO₂) is 0.41 and the quality coefficient (K_{q}=(CaO+Al₂O₃+MgO)/(SiO₂+TiO₂)) is 1.67. It will be appreciated that the foregoing coefficients indicate that the source of slag is a high quality neutral GBFS having a high reactivity.

The X-Ray Diffraction (XRD) analysis, as annexed hereto, further shows that the source of slag is mostly non-aqueous amorphous matter. Furthermore, it can be seen that the source of slag may contain trace amounts of gehlenite.

The optimum weight percentage of silica fume comprise 1.0 to 5.0 weight % of the source of slag. The weight percentage of slaked lime comprise of 1.0 to 5.0 weight % of the source of slag.

The alkaline metal hydroxide is used as an accelerating admixture.

The alkaline-activated slag composition of the present invention may be used in conjunction with particulate matter in the manufacture of concretes.

The specific gravity of the particulate matter may be 2860 kg/m³.

The particulate matter may further have a maximum size of 9.5 mm and the modulus of fineness of the source of sand used in the particulate matter may be 3.1 with a maximum of 17 weight % passing through a 75 µm sieve.

The alkaline-activated slag composition of the present invention may be used in either a pre-cast steam hardened application or may be hardened at ambient temperatures. According to a second aspect of the invention, there is provided a process for the preparation of a dry mixed ready-to-use alkaline-activated slag composition, according to claim 1 which process includes:
(i) providing a source of a non-aqueous slag;
(ii) providing a source of a non-aqueous alkali metal carbonate;
(iii) providing silica fume;
(iv) providing slaked lime; and
(v) mixing together the source of non-aqueous slag, the source of non-aqueous alkali metal carbonate, the silica fume and slaked lime in any order of addition, to form the ready-to-use dry mixed alkaline-activated slag composition.

The process may include the additional step of providing a source of a non-aqueous plasticizer.

In one embodiment of the process, the source of the non-aqueous plasticizer may be in the form of sodium lignosulfonate. The sodium lignosulfonate may comprise 0.1 to 3.0 weight % of the source of slag.

In one embodiment of the invention, the source of the non-aqueous slag for the process may be a granulated blast-furnace slag (GBFS). The slag may be characterized in accordance with the chemical composition as presented in Table 5. As can be observed from this Table, the basicity coefficient (K_{b}=(CaO+MgO)/(SiO₂+Al₂O₃)) is 0.92, the activity coefficient (Kₐ=Al₂O₃/SiO₂) is 0.41 and the quality coefficient (Kq=(CaO+Al₂O₃+MgO)/(SiO₂+TiO₂)) is 1.67.

The X-Ray Diffraction (XRD) analysis, as annexed hereto, further shows that the source of slag is mostly amorphous matter. Furthermore, it can be seen that the source of slag may contain trace amounts of gehlenite. The optimum weight percentage of non-aqueous silica fume in the process may comprise 1.0 to 5.0 weight % of the non-aqueous source of slag. The optimum weight percentage of slaked lime used in the process comprise of 1.0 to 5.0 weight % of the source of non-aqueous slag.

In terms of the mixing step, a ball mill may be used for grinding the source of non-aqueous slag, the source of non-aqueous alkali metal carbonate, the source of non-aqueous amorphous polymorph of silicon dioxide and the source of non-aqueous alkaline metal hydroxide together.

According to claim 15 there is provided for the use of the alkaline-activated slag composition, according to claims 1 to 8, in the manufacture of concrete or mortar. These and other aspects of the present invention will now be described in more detail herein and below.

### BRIEF DESCRIPTION OF THE TABLES AND FIGURES

The invention will now be described in more detail, by way of example only, with reference to the accompanying tables and figures in which:
- **Table 1:**: shows the results of the chemical composition and physical characteristics of the materials according to a first aspect of the invention;
- **Table 2:**: describes the results of the different mixtures according to the first aspect of the invention;
- **Table 3:**: illustrates the concentration of ions in pore solution of AAS pastes at 1 day (mg/l) according to the first aspect of the invention;
- **Table 4:**: shows the mean atomic ratios of AAS pastes at 1 day according to the first aspect of the invention;
- **Table 5:**: describes the chemical composition of the materials according to a second aspect of the invention;
- **Table 6:**: shows the AAS cement compositions according to the second aspect of the invention;
- **Table 7:**: illustrates the AAS concrete mix designs and workability according to the second aspect of the invention; and
- **Table 8:**: shows the AAS cements fineness and setting times according to the second aspect of the invention.
- **Figure 1:**: shows the strength development of AAS concretes accelerated with an admixture of sodium hydroxide according to a first aspect of the invention;
- **Figure 2:**: describes the strength development of AAS concretes accelerated with OPC and a combination of silica fume and slaked lime according to the first aspect of the invention;
- **Figure 3:**: shows the XRD spectra of raw slag and AAS pastes at 1 day according to the first aspect of the invention;
- **Figure 4:**: describes the XRD spectra of raw slag and AAS pastes at 28 days according to the first aspect of the invention;
- **Figure 5:**: illustrates the FTIR spectra of raw slag and AAS pastes at 1 day according to the first aspect of the invention;
- **Figure 6:**: shows the FTIR spectra of AAS pastes at 28 days according to the first aspect of the invention;
- **Figure 7:**: illustrates the SEM images of AAS pastes at 1 day according to the first aspect of the invention wherein the left column shows a SE image of a fracture surface and the right column shows a BSE image of a polished surface, and wherein a) SC; b) SH50; c) OPC4 and d) SFSL;
- **Figure 8:**: shows the microstructure of AAS pastes after 28 days of curing according to the first aspect of the invention wherein a) SC; b) SH50; c) OPC4 and d) SFSL;
- **Figure 9:**: describes the nanostructure of AAS pastes at 28 days: a) SC; b) SH50; c) OPC4 and d) SFSL according to the first aspect of the invention;
- **Figure 10:**: shows the SEM images of the AAS cement containing an accelerating admixture of silica fume and slaked lime, according to a second aspect of the invention;
- **Figure 11:**: illustrates the SEM images of aged AAS cement SC45-390 according to the second aspect of the invention;
- **Figure 12:**: shows the SEM images of fresh AAS cement SC45-390 according to the second aspect of the invention;
- **Figure 13:**: illustrates the strength development of AAS cement with water to binder (W/B) ratio of 0.35 according to the second aspect of the invention;
- **Figure 14:**: shows the strength development of AAS cement with W/B ratio of 0.30 steamed at 85°C according to the second aspect of the invention; and
- **Figure 15:**: shows the strength development of AAS cement with W/B ratio of 0.35 at 25°C accelerated with combinations of silica fume and slaked lime according to the second aspect of the invention.

The foregoing and other objects and features and advantages of the present invention will become more apparent from the following description of certain embodiments of the present invention by way of the following non-limiting examples.

### EXAMPLES OF THE INVENTION:

The invention will now be described with reference to the following non-limiting examples.

### 1. Example 1

In the first example, different AAS compositions hardened as concrete, were studied and investigated, as a possible alternative to OPC concrete.

As mentioned before sodium carbonate as an activator provides high strength, good durability, long setting times and low shrinkage. A sodium carbonate solution is much less corrosive than sodium silicate/hydroxide, making for safer work environments. However, a major shortcoming of sodium carbonate as activator is the slow strength development of AAS concrete containing acid or neutral slag hardened at ambient temperature. Conventional research on AAS concrete has mainly focused on sodium silicate and sodium hydroxide activators and their combinations. Thus, literature on AAS concrete containing sodium carbonate as the main activator is limited, especially on acceleration of strength development of AAS concrete containing acid or neutral slags hardened at ambient temperature.

The aim of this first example is to add knowledge on AAS concrete containing sodium carbonate and neutral GBFS. Three accelerating admixtures were used in this example, and their effect on hydration products and strength development was investigated.

### 2. Experimental setup

### 2.1. Materials

A granulated blast-furnace slag was used to produce AAS concrete. The chemical composition of the slag is presented in Table 1. The GBFS was a neutral slag with a basicity coefficient (K_{b}=(CaO+MgO)/(Al₂O₃+SiO₂)) of 0.92 based on the chemical composition as indicated in Table 1. X-Ray Diffraction analysis shows that the slag is a glassy phase with trace inclusions of gehlenite. The particle size range of said slag, determined by laser granulomentry, was 0.4-152 µm, with a mean (d₅₀) of 16.8 µm and 10% of particles finer than 1.8 µm.

**Table 1: Chemical composition and physical characteristics of the materials**

| Material | Chemical composition, % | | | | | | | | | | Physical characteristics | |
|---|---|---|---|---|---|---|---|---|---|---|---|---|
| | SiO₂ | TiO₂ | Al₂O₃ | Fe₂O₃ | MgO | CaO | Na₂O | K₂O | SO₃ | LOI, % | Blaine, m²/kg | Relative density |
| Slag | 34.87 | 0.72 | 14.38 | 0.89 | 8.03 | 37.05 | <0.01 | 0.72 | 1.96 | 0.16 | 425 | 2.90 |
| Cem I 52.5N | 22.30 | 0.50 | 4.98 | 3.35 | 1.92 | 61.50 | 0.21 | 0.26 | 2.92 | 1.77 | 480 | 3.17 |
| Silica fume | 84.00 | 0.03 | 0.75 | 1.96 | 1.08 | 2.22 | 0.17 | 3.43 | 0.09 | 5.56 | n.a. | 2.30 |
| Slaked lime | 4.01 | 0.03 | 0.37 | 0.36 | 1.67 | 67.8 | 0.00 | 0.08 | 0.11 | 25.0 | 1060 | 2.33 |

Commercially available sodium carbonate (99% purity) was used to prepare the activator solutions. Tap and distilled water was used to prepare alkaline solutions for AAS concrete and pastes, respectively.

Sodium hydroxide flakes (98.5% purity), OPC CEM I 52.5N, and a combination of silica fume and slaked lime were used as admixtures to promote early strength development of AAS concrete at room temperature. The chemical composition and physical characteristics of the materials are shown in Table 1. The particle size distribution of CEM I 52.5N was 0.4-93 µm, with a mean (d₅₀) of 16.4 µm and 10% of particles finer than 3.5 µm.

Crushed dolomite stone and dolomite sand were used as aggregates. The relative density of the aggregates was 2.86. The maximum size of coarse aggregate was 9.5 mm. The dolomite sand had a fineness modulus of 3.86 with 9% particles smaller than 75 µm.

### 2.2. Mix designs

All AAS concrete mixes (Table 2) contained 500 kg/m³ of binder (slag, OPC, silica fume and slaked lime).

**Table 2: Results of different concrete mixtures**

| Mix code | | Components, kg/m³ | | | | | |
|---|---|---|---|---|---|---|---|
| | Slag | Cem I 52.5N | Silica fume | Slaked lime | Stone 9.5 mm | Sand | Activator^{a)} |
| SC | 500 | | | | 1200 | 650 | 3.5/0 |
| SH20 | 500 | | | | 1200 | 650 | 2.8/0.9 |
| SH50 | 500 | | | | 1200 | 650 | 1.8/2.3 |
| SH100 | 500 | | | | 1200 | 650 | 0/4.7 |
| OPC3 | 485 | 15 | | | 1203 | 651 | 4.6/0 |
| OPC4 | 480 | 20 | | | 1203 | 651 | 4.6/0 |
| OPC5 | 475 | 25 | | | 1203 | 651 | 4.7/0 |
| SFSL | 470 | | 15 | 15 | 1196 | 649 | 4.5/0 |

| | | | | | | | |
|---|---|---|---|---|---|---|---|
| ^{a)} Sodium carbonate/sodium hydroxide in Na₂O weight % of slag. | | | | | | | |

The coarse to fine aggregate weight ratio of 65:35 and the alkaline solution to binder ratio of 0.36 l/kg were kept constant in all mixes.

### 2.3. Sample synthesis and tests procedures

The concrete preparation procedure consisted of mixing dry materials in a pan mixer, the addition of aqueous activator solution, and a further one and a half minutes of mixing. The fresh concrete mix was immediately placed in 100 mm plastic cube moulds and vibrated.

Cast samples were cured at 25°C and >90% humidity for the first 24 hours. Samples of the control mix without accelerating admixtures (SC, Table 2) were cured for 48 hours as they could not be de-moulded at 24 hours due to slow strength development. After de-moulding, all samples were stored in a room with constant conditions: 25°C and 55% relative humidity. Concrete samples were tested for compressive strength according to the standard procedure BS EN 12390-3, (2009) [2] at 1, 28, and 91 days.

Analysis of pore solution chemistry was done on pore liquid expressed from 100 ml paste samples. AAS paste mixes were obtained by excluding aggregates from corresponding concrete mix designs (Table 2). The paste samples were cast into plastic bottles and cured under controlled conditions at about 20°C. The expression of pore solution from hardened AAS pastes was performed using a device similar to the one described by Barneyback and Diamond, (1981) [3]. Elemental composition of the pore solutions was studied by a Spectro-Acros Inductively-Coupled Plasma Optical Emission Spectroscopy (ICP-OES) instrument.

AAS pastes were prepared for mineralogical and microstructural characterization with X-Ray Diffractometry (XRD), Attenuated Total Reflectance Fourier Transform Infrared Spectroscopy (ATR-FTIR), Scanning Electron Microscopy (SEM), Electron Backscattered Scanning Electron Microscopy (BSE) and Energy Dispersive Spectroscopy (EDS). Paste samples were cured at 25°C and >90% humidity for the first 24 hours and at 25°C and 55% relative humidity afterwards.

XRD analysis was done at 1 and 28 days. Paste samples were crushed into small pieces with a maximum size of 5 mm and submerged into ethanol to prevent further hydration. Crushed samples were then dried at 50°C for 12 hours and milled in a tungsten carbide mill. The powdered samples were analysed using a PANalytical X'Pert Pro powder diffractometer in θ-θ configuration with an X'Celerator detector, variable divergence and receiving slits with Fe filtered Co-Kα radiation (λ=1.789Å). The specimens were collected in the 2θ range 5-90° with a scanning rate of 17°/sec and a step size of 0.017° 2θ. The phases were identified using X'Pert Highscore plus software.

Samples of pastes for SEM investigation were crushed at 1 and 28 days, washed with ethanol, and placed into a desiccator. Freshly fractured surfaces were coated with carbon and studied using a Zeiss Ultra Plus SEM at an accelerating voltage of 1 kV.

BSE/EDS studies were carried out on 1-day pastes. Samples were submerged into ethanol for 24 hours to remove the capillary water, dried in a desiccator before epoxy resin impregnation in vacuum. Samples were ground and polished using diamond pads (66, 28.8 and 16 µm) and diamond suspensions (9, 3, 1 and 0.25 µm). Polished sections were coated with a single carbon layer to provide a layer of minimal thickness which would be undetectable during EDS scanning. A JEOL JSM 5800 Scanning Electron Microscope (20.0 kV) fitted with a solid-state BSE detector and a Thermo Scientific NSS7 Energy Dispersive X-Ray analyser (EDS) was used for the study.

Samples for ATR-FTIR analysis were prepared as for XRD. Infrared spectra were recorded using a Golden Gate diamond ATR cell (Bruker), which fits in the macro sample compartment of a Vertex 70v spectrometer (Bruker Optics). The contact area between the sample and the diamond ATR crystal is 2 mm in diameter. Spectra were recorded with 32 acquisitions at 4 cm⁻¹ resolution over a spectral range of 4000-600 cm⁻¹.

### 3. Results and discussion

### 3.1. Compressive strength

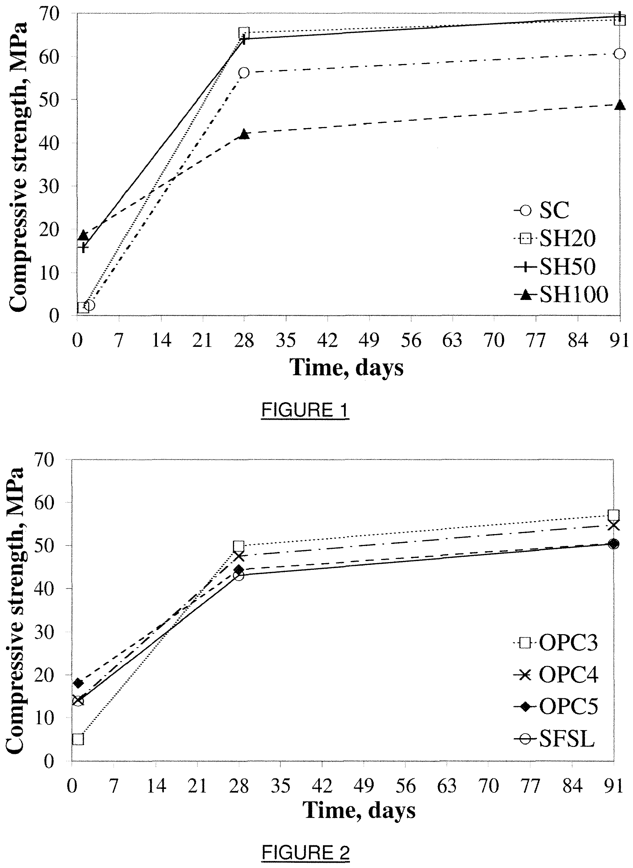

Three admixtures to accelerate hydration of AAS concrete, containing neutral GBFS and sodium carbonate at room temperatures, were investigated. The first accelerating admixture used in this study was sodium hydroxide. Sodium hydroxide increases the pH of alkaline solutions, which facilitates dissolution of the slag glass structure and promotes hydration. Two mixes, SH20 and SH50, were chosen to compare with the control mix SC (Table 2). For comparative purposes, a mix containing only sodium hydroxide as activator was cast (SH100, Table 2). Strength development of the mixes can be seen in Figure 1.

Replacement of sodium carbonate with 20 weight % sodium hydroxide (SH20, Figure 1) gives noticeable acceleration of strength development at 24 hours. SH20 samples yielded average strength of 1.8 MPa after 24 hours while samples of the control mix could not be demoulded and were tested after 48 hours. The level of acceleration however is not significant and could not be used in industrial applications. The mix accelerated with 50 weight % sodium hydroxide shows significant increase in an early strength (SH50, Figure 1). The strength is comparable to the strength of the mix activated with only sodium hydroxide. It is significant that 50 weight % replacement of sodium carbonate with sodium hydroxide does not impair the strength in comparison to the control mix at later stages of hydration. Activation with only sodium hydroxide (SH100, Fig. 1) shows the lowest strength in the long term, in comparison to other mixes. SH50 mix shows the best result in terms of strength kinetics of the AAS concrete.

The second admixture used for acceleration of AAS concrete hydration at room temperature was OPC. Compressive strength results for the AAS concrete accelerated with 3, 4 and 5% OPC (Table 2) are presented in Figure 2.

It can be seen that 1-day strength increases with increasing OPC replacement from 3 to 5 weight %, but 28 day strength is reduced. At all levels of replacement of slag with OPC, strength of AAS concrete is reduced in comparison to the control mix at 28 and 91 days (SC, Figure 1). The reduction in strength at 28 and 91 days can be caused by the gypsum contained in OPC [2,14]. Gypsum neutralises the alkaline component and produces expansive non-binding mirabilite (Na₂SO₄•10H₂O) and thus has a detrimental effect on strength. OPC was used in this study because it is available on the market, while cement clinker, which would be preferable as an accelerating admixture, is not accessible to small producers. In terms of early and long-term strength, 4 weight % of OPC gives the best results amongst the mixes accelerated with OPC (Figure 2).

The third accelerating admixture was a combination of silica fume and slaked lime. This method of acceleration was driven by the hypothesis that when OPC is added to promote hydration, slag hydration is accelerated by C-S-H formed during rapid cement hydration. The rapid cement hydration is caused by an alkaline solution of sodium carbonate. The C-S-H acts as crystallization centres (substrate) which promotes slag hydration and formation of new portions of C-S-H.

Combinations of silica fume and slaked lime were used by Douglas and Brandstetr, (1990) [1] to promote early strength development of AAS concrete, but different percentages of the admixtures and different activators were used in comparison to the present invention. Douglas and Brandstetr, (1990) [1] used sodium silicate solutions as activators providing sufficient amounts of readily available reactive silica.

The nature of the activator in the present invention is different; and the AAS concrete did not contain high levels of available silica for reaction in the system at early stages of hydration, due to the relatively low pH of the sodium carbonate activator. The low pH causes slow breakage of the strong Si-O bonds in the slag glassy phase. The addition of silica fume with slaked lime introduces sources of silica and calcium required for C-S-H formation and eventually accelerates hydration of AAS concrete containing sodium carbonate.

Slaked lime instead of unslaked lime was chosen to prevent possible pseudo-flash setting which could be the result of a local rise in temperature caused by the exothermal reaction between unslaked lime and water. Unslaked lime would also increase water demand of the binder due to the immediate and intensive reaction with water.

The strength development of concrete mixes accelerated with the combination of silica fume and slaked lime (SFSL, Table 2) is shown in Figure 2. The accelerating effect of the admixture is similar to that of OPC. At 1 day, strength of SFSL mix is equal to the strength of the mix accelerated with 4 weight % OPC, but long-term strength decreases and matches the strength of OPC 5 mix. Strength results show that a combination of silica fume and slaked lime efficiently accelerates AAS concrete containing neutral GBFS and sodium carbonate at an early stage, but long-term strength decreases in comparison to the control mix (SC, Figure 1).

The strength development of AAS concrete is governed by the interactions between solid and liquid components; that is dissolution rates, saturation/chemical equilibrium of the pore solution, precipitation or hydration rates and microstructural evolution. The following sections thus focus on these various aspects of AAS concrete hydration; and changes caused by the accelerating admixtures. AAS pastes were used in the further examples.

### 3.2. Pore solution chemistry

The composition of the pore solution in the AAS pastes was analysed after 1 day of hydration. The most prominent difference in chemistry of the pore solutions is Si concentration (Table 3). SC and SH20 pastes which had the lowest strength at 1 day (Figure 1) have very high Si concentration. When the concentration of ionic species reaches the product of solubility of different solid compounds, they precipitate, generating the microstructure of the AAS pastes. Puertas *et al,* (2004) [4] reported that the concentration of Si in the pore solution drastically reduced from 3 to 24 hours of hydration due to precipitation of C-S-H gel. Thus, the pore solution of the pastes with high Si concentration had not reached complete saturation at 1 day; and the high Si concentration is associated with the fresh pastes before or during very early stages of C-S-H formation. SEM study of AAS pastes confirms (see SEM discussion herein) that the low strength of the base paste is caused by lack of hydration products.

The concentration of Mg in all pore solutions (Table 3) is relatively high in comparison to previously published results [4,5]; and it reduces in the accelerated AAS pastes indicating possible precipitation of hydrotalcite-type phase (see XRD and EDS discussion herein).

The concentration of Al is also high in all pore solutions, except the control paste, indicating that Al/Si ratios are considerably higher than that recorded by other researches [4,5]. The low Al concentration in the pore solution of the base paste additionally confirms a slow rate of dissolution of slag particles. The relatively high Mg and Al concentrations (Table 3) can be caused by the nature of the activator used in the present invention.

**Table 3: Concentration of ions in pore solution of AAS pastes at 1 day (mg/l)**

| Paste | Ca | Al | Si | Mg |
|---|---|---|---|---|
| SC | 11.2 | 139 | >2212 | 2.2 |
| SH20 | 12.6 | 448 | >2338 | 1.5 |
| SH50 | 5.7 | 810 | 761 | 1.2 |
| SH100 | 6.0 | 804 | 706 | 1.2 |
| OPC3 | 10.8 | 560 | 363 | 1.1 |
| OPC4 | 8.7 | 626 | 361 | 1.1 |
| OPC5 | 8.8 | 575 | 416 | 1.1 |
| SFSL | 11.0 | 629 | 364 | 1.0 |

### 3.3. XRD

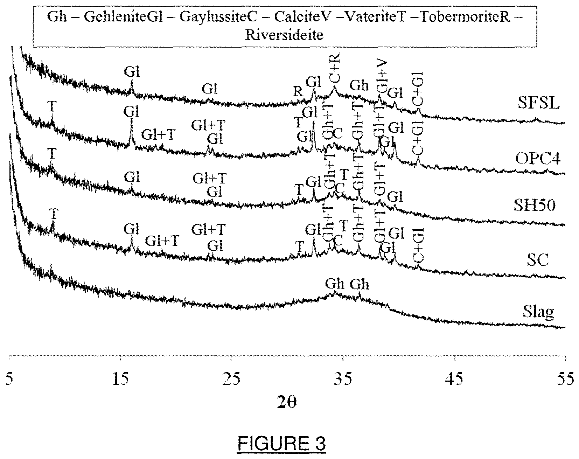

The diffractograms of the anhydrous slag and 1-day AAS pastes are presented in Figure 3. Tobermorite (Ca_{2.25}Si₃O_{7.5}(OH)1.5H₂O, Powder Diffraction File (PDF) # 01-083-1520) was identified in all AAS pastes except the paste accelerated with the combination of silica fume and slaked lime. In the XRD spectrum of the later paste, the peaks attributed to poorly crystalline riversideite (Ca₅Si₆O₁₆(OH)₂, PDF# 00-029-0329) were found. Both types of C-S-H most certainly have some degree of Al substitution. It is important to note that despite the high Si concentration in the pore solution of the control paste, indicating early stage C-S-H precipitation, and the very small amount of hydration products observed by BSE at 1 day (see SEM discussion herein) tobermorite-type C-S-H could be detected by XRD (Figure 3). This can be explained by elevated crystallinity of C-S-H gel in AAS systems. For all pastes, two types of carbonates, calcite (CaCO₃, PDF# 01-072-1937) and gaylussite (Na₂Ca(CO₃)₂(H₂O)₅, PDF# 01-074-1235), were identified, along with gehlenite (Ca₂Al(AlSi)O₇, PDF# 01-089-5917) residual from the said source slag. A small amount of vaterite (CaCO₃, PDF# 01-074-1867) was found in the AAS paste accelerated with the combination of silica fume and slaked lime.

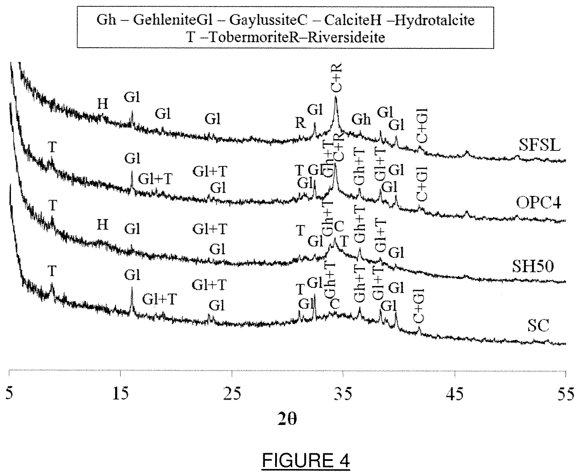

Figure 4 presents the diffractograms of 28-days AAS pastes. Riversideite was identified in pastes accelerated with OPC and the combination of silica fume and slaked lime. The intensity of the peaks significantly increases from day 1 indicating that more of riversideite was formed. The intensity can also be affected by the increased level of polymerization of C-S-H gel in the pastes confirmed by the shift of the peak around 960 cm⁻¹ to higher wave numbers (see ART-FTIR discussion herein), but the peak on ART-FTIR spectra also has increased intensity at 28 days which confirms the increase in amount of the C-S-H formed.

The increase in intensity of the XRD peaks serves as a good indicator of riversideite formation in the accelerated pastes (OPC4 and SFSL, Figure 4), identification of which would be difficult due to overlapping with the calcite peak at around 34° 2θ. The control paste shows minor changes in the overlapping peak, which indicates an absence of riversideite (SC, Figure 4). Calcite and gaylussite remain in all AAS pastes but the intensity of their peaks decreases in the accelerated pastes. Gehlenite is identified in all pastes. The formation of hydrotalcite (Mg_{0.667}Al_{0.333}(OH)₂(CO₃)_{0.167}(H₂O)_{0.5}, PDF# 01-089-0460) is observed in the pastes accelerated with sodium hydroxide and the combination of silica fume and slaked lime.

### 3.4. ATR-FTIR

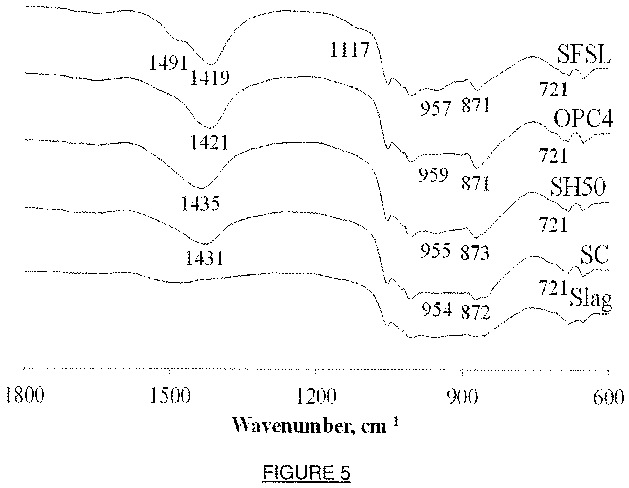

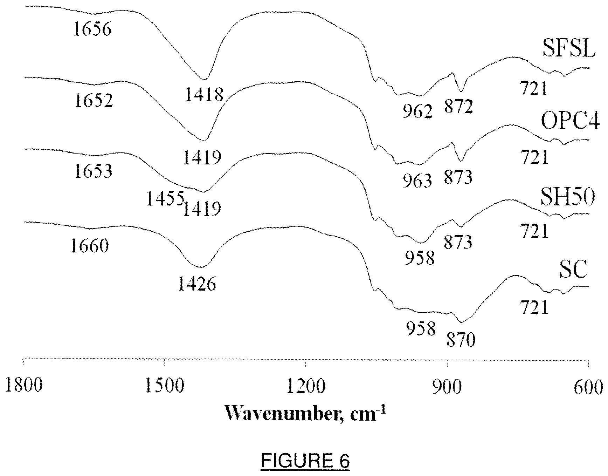

FTIR spectra of the samples of AAS pastes are presented in Figure 5 and in Figure 6. Bands typical for carbonate phases can be seen at 870-873 cm⁻¹ (the out-of-plane bending of the C-O bond) and 1418-1491 cm⁻¹ (the asymmetric stretching of the C-O bond). These bands are related to the presence of carbonates, which were identified by XRD analysis (Figure 3 and Figure 4). AAS paste accelerated with the combination of silica fume and slaked lime has a prominent band at 1491 cm⁻¹ at day 1 of hardening (Figure 5). This band indicates the presence of vaterite, which was also confirmed by XRD analysis of the paste at day 1 (Figure 3). The bands related to water can be observed at 1650-1690 cm⁻¹ (bending vibrations in H₂O molecules) for all the pastes. These bands do not appear in anhydrous slag (Figure 5) and indicate the presence of crystalline or adsorbed molecules of water on the surfaces of reaction products. The bands become more prominent at 28 days (Figure 6) which shows the progress of hydration and development of more products like C-S-H gel. The most prominent difference between the AAS pastes at 1 day (Figure 5) is in the region of the stretching vibrations of the T-O-T bonds (T: tetrahedral Si or Al) at 800-1200 cm⁻¹.

A well-developed band at 957 cm⁻¹ and a shoulder at 1117 cm⁻¹ can be seen in the spectra of the paste accelerated with a combination of silica fume and slaked lime. The band at 957 cm⁻¹ is assigned to the Si-O stretching vibrations generated by Q² tetrahedra that comprise C-S-H and more specifically C-(A)-S-H gel. The shoulder at 1117 cm⁻¹ can be associated with the formation of a silicon-rich gel with some sodium in its composition and a higher degree of polymerization than the C-(A)-S-H gel. The shoulder does not appear at 28 days (Figure 6) indicating that the silicon-rich gel reacts, as hydration time increases, forming additional C-(A)-S-H gel. At 28 days, the main difference between the control and accelerated pastes is the appearance of a band around 960 cm⁻¹.

It is much more developed in the case of accelerated pastes due to more C-(A)-S-H gel formation. In the case of pastes accelerated with OPC and the combination of silica fume and slaked lime, the band also shifts towards higher wave numbers of 963 cm⁻¹, The shift indicates a higher degree of polymerization, a decrease in the Ca/Si and an increase in the Si/AI ratio in the C-(A)-S-H gel structure.

### 3.5. SEM

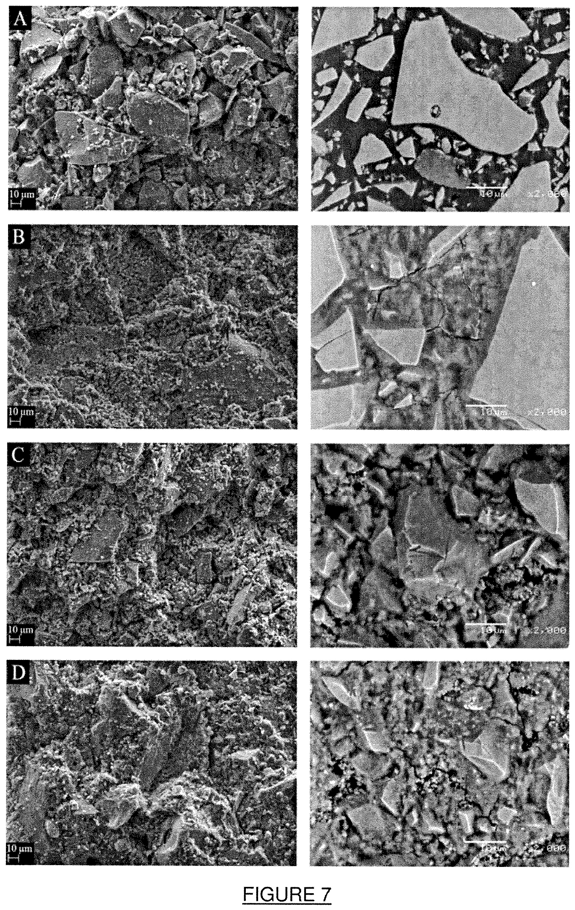

Scanning Electron Microscope images of the AAS pastes microstructure are presented in Figure 7 to Figure 9. Normally, the microstructure of AAS paste is dominated by the relatively fast "through solution" precipitation of a gel-like C-S-H matrix in the pore space; and the internal space between the slag grains is readily completely filled with C-S-H gel after 24 hours when stronger activators (such as, sodium silicate and sodium hydroxide) are used. It can be seen that the control paste activated with sodium carbonate shows little hydration at an early age (Figure 7A). The structure of the paste is very friable (Figure 7A, left) and porous (Figure 7A, right). Many slag particles look untouched with sharp edges and with no clear signs of reaction products on the particle surfaces (Figure 7A, left). Very little hydration products can be seen in the BSE image (Figure 7A, right) and shows a low level of reaction with the activator. The SEM study supports the results on the pore solution chemistry of AAS pastes (Table 3), indicating that the pore solution of the control paste did not reach complete saturation at 24 hours, caused by slow dissolution of slag particles (Figure 7A); and the formation of C-S-H gel, was at an early stage. All accelerated pastes produced noticeable amounts of hydration products after 1 day of curing (Figure 7B to Figure 7D). Cracks can be seen throughout the structure of all the accelerated AAS pastes. They are most probably caused by conditioning of the samples as AAS concrete is more sensitive to drying than OPC concrete.

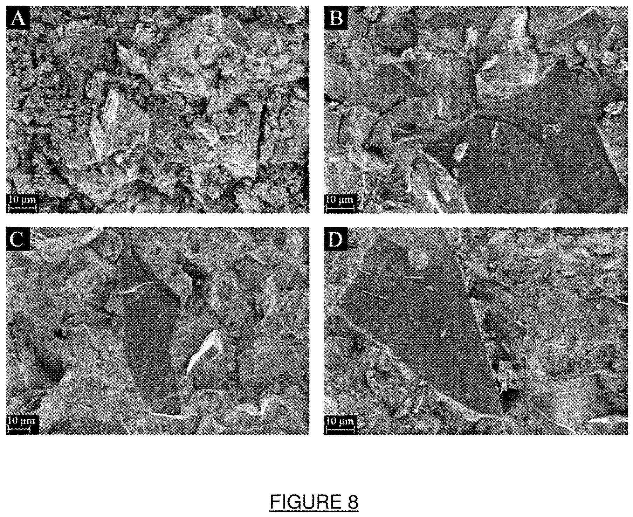

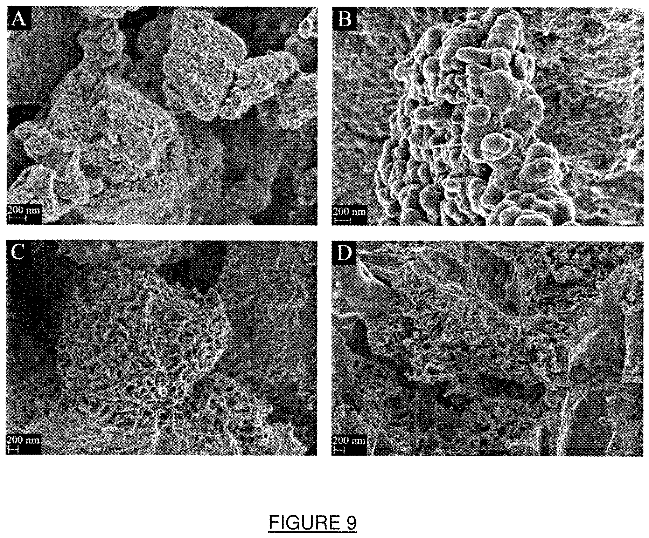

Figure 8 shows the microstructure of AAS pastes after 28 days of curing. All pastes showed solid continuous structure with only one exception, slag activated with sodium carbonate still had a friable and highly porous structure (Figure 8A). Better resolution on sample topography at high magnification was achieved by the Ultra Plus Zeiss Field Emission Microscope at low voltage (penetration depth of the electron beam into a sample is much less than at high voltages usually used in SEM investigations, and the sample is more stable at low voltage). Nanoscale images of the AAS pastes after 28 days of hardening are shown in Figure 9. It can be seen that AAS pastes accelerated with OPC and the combination of silica fume and slaked lime, have highly tortuous structures on nanoscale (Figure 9C and Figure 9D). The control (Figure 9A) and accelerated with sodium hydroxide (Figure 9B) AAS pastes do not have such structure. This pore network obstruction is most probably provided by riversideite (C-(A)-S-H) because this type of C-S-H gel could be found only in the OPC4 and SFSL pastes (Figure 9C and Figure 9D) and the only difference as determined by XRD analysis, between these pastes and the rest of AAS pastes, was the formation of C-(A)-S-H gel which structure resembles riversideite.

### 3.6. EDS

Table 4 shows atomic ratios of hydration products calculated from X-Ray microanalysis (EDS) data. Magnesium and part of aluminium can be assigned to the hydrotalcite which was found in some AAS pastes at 28 days by XRD analysis (Figure 4). At an early stage of hydration, discrete crystals of the hydrotalcite could not be detected by XRD analysis (Figure 3) neither identified in the SEM images (Figure 7 and Figure 9), but previous studies of OPC-slag blended pastes by Richardson and Groves, (1992) [6] found sub-micrometer sized crystals of this phase dispersed through C-S-H gel.

X-ray microanalysis of AAS cement done by Wang and Scrivener, (1995) [7] showed that the Mg/AI ratio of the hydrotalcite-type phase was 2.2 which is very close to the Mg/AI ratio of 2.0 of the hydrotalcite identified by XRD analysis (Figure 4) as per the present invention. Al can replace the bridging Si in the dreierketten C-S-H structure. Assuming that pentrameric chains predominate in C-S-H structure, the presence of Al in all the bridging sites would result in an Al/Si ratio of 0.25.

Assuming that the hydrotalcite (Figure 4) could form in all pastes at an early age on sub-micrometer level, calculations based on its Mg/AI ratio and EDS analysis results (Table 4) indicate that the rest of the aluminium contributes to Al/Si ratios of 0.28, 0.17, 0.19 and 0.25 for the control paste and pastes accelerated with sodium hydroxide, OPC, a combination of silica fume and slaked lime respectively. The Al/Si ratios of the pastes accelerated with sodium hydroxide and OPC are in good correlation with the results of previous research [8,9], but the control and accelerated with the combination of silica fume and slaked lime pastes have high Al/Si ratios, which is unlikely to be accommodated within the structure of the C-S-H gel at day 1 due to the insufficient degree of polymerization.

ATR-FTIR results (Figure 5) supports the view that only part of Al in these pastes is in C-S-H gel structure; the peak at about 960 cm⁻¹ suggests that all AAS pastes have close Al/Si ratios (higher Al uptake would shift the peak towards lower wave number).

**Table 4: Mean atomic ratios of AAS pastes at 1 day**

| Paste | Ca/Si | Mg/Si | Al/Si | Na/Ca |
|---|---|---|---|---|
| SC | 1.09±0.23 | 0.74±0.10 | 0.65±0.08 | 0.13±0.04 |
| SH50 | 1.29±0.33 | 0.68±0.18 | 0.51±0.14 | 0.30±0.08 |
| OPC4 | 1.05±0.22 | 0.86±0.12 | 0.62±0.03 | 0.28±0.21 |
| SFSL | 3.46±0.64 | 0.21±0.04 | 0.35±0.04 | 0.48±0.24 |

The Ca/Si ratio for the paste accelerated with sodium hydroxide is higher than expected for tobermorite and this could be caused by intermixing with gaylussite and calcite which were identified by XRD (Figure 3) and ATR-FTIR (Figure 5) analysis. The paste accelerated with the combination of silica fume and slaked lime has the highest Ca/Si ratio (Table 3) which should be caused by the addition of slaked lime and intermixing of C-(A)-S-H gel with carbonates (Figure 3 and Figure 5). The paste has prominent differences in the atomic ratios of hydration products in comparison to the rest of the AAS pastes. The content of Mg and Al is much lower, but the Na and Ca content are significantly higher. Significantly lower Mg and Al uptakes in the paste indicate that the hydration products at day 1 might be presented mostly by products of the reaction between the combined accelerator and the activator. Some of the slag has however participated in the reaction introducing Mg and Al into the hydration products.

### 4. Conclusion

AAS concrete containing neutral GBFS and activated with sodium carbonate can be accelerated by different admixtures, which eliminates the necessity of heat treatment. Accelerating admixtures of sodium hydroxide, OPC and the combination of silica fume and slaked lime, influence the hydration products formed by AAS pastes. Calcium and silica rich accelerators such as OPC and the combination of silica fume and slaked lime promote the formation of C-(A)-S-H gel, with a highly tortuous riversideite structure. In the case of AAS cement accelerated with OPC, riversideite only forms in the later stages, tobermorite like C-(A)-S-H gel forms at early stages.

AAS paste accelerated with the combination of silica fume and slaked lime contains only riversideite while paste accelerated with the addition of sodium hydroxide and the control non-accelerated AAS pastes produce only tobermorite. Thus, both types (riversideite and tobermorite) of C-(A)-S-H gel exist only in AAS paste accelerated with admixture of OPC, placing it as a transition between AAS pastes containing accelerating admixture of sodium hydroxide and the combination of silica fume and slaked lime. Sodium-calcium carbonate, known as gaylussite, and calcite are identified in all AAS pastes indicating cation exchange reaction between the slag and the activator, as well as some degree of carbonation.

### 5. Example 2

In a second example of the invention, the possibility of producing a dry powder AAS cement as a ready-to-use product which can be packed in bags and mixed with water to produce a concrete was investigated.

Eliminating the need for an alkaline solution gives the following advantages over traditional AAS concrete technology where an alkali is introduced to the concrete mixture in the form of an aqueous solution, namely -
- Safety on construction site: Aqueous solutions of alkalis used for activation are normally highly corrosive mediums and utilizing them is hazardous;
- Negation of the need for a "two packages" product;
- Quality control: In case of an aqueous activator solution, two parameters should be controlled in the production process, i.e. the amount of liquid activator and its density (concentration). Technologically it becomes even more difficult to control AAS concrete mix design when aggregates are piled in open areas. Water from aggregates will dilute the activator solution, deteriorating many characteristics of AAS concrete. Keeping in mind the limits of solubility of typical activators in water at certain temperatures, it is obvious that in some cases it would not be possible to achieve the correct mix proportions. These hurdles do not exist for a dry powder AAS cement of the present invention.

### 6. Experimental procedures

### 6.1. Materials

A blast-furnace slag was used to produce the AAS cement of the present invention. The chemical composition of the slag is presented in Table 5. The basicity coefficient (K_{b}=(CaO+MgO)/(SiO₂+Al₂O₃)), activity coefficient (Kₐ=Al₂O₃/SiO₂), and quality coefficient (K_{q}=(CaO+Al₂O₃+MgO)/(SiO₂+TiO₂)) based on the chemical composition are 0.92, 0.41, and 1.67, respectively. The coefficients indicate that the slag is a high quality neutral BFS with a high reactivity. X-ray diffraction (XRD) analysis shows that the slag is mostly amorphous matter, and that it contains trace amounts of gehlenite. The specific gravity of the slag was 2900 kg/m³.

**Table 5: Chemical composition of the materials**

| Material | SiO₂ | TiO₂ | Al₂O₃ | Fe₂O₃ | MgO | CaO | Na₂O | K₂O | SO₃ | LOI |
|---|---|---|---|---|---|---|---|---|---|---|
| Slag | 34.87 | 0.72 | 14.38 | 0.89 | 8.03 | 37.05 | <0.01 | 0.72 | 1.96 | 0.16 |
| Silica fume | 84.00 | 0.03 | 0.75 | 1.96 | 1.08 | 2.22 | 0.17 | 3.43 | 0.09 | 5.56 |
| Slaked lime | 4.01 | 0.03 | 0.37 | 0.36 | 1.67 | 67.80 | 0.00 | 0.08 | 0.11 | 25.0 |

Sodium carbonate powder (99% purity) was used as an activator. A combination of silica fume and slaked lime was used as an accelerating admixture to promote strength development of dry powder AAS cements at ambient temperatures. Slag was replaced by the admixture at 2.0, 6.0, and 10.0 weight %. The chemical composition of silica fume and slaked lime are presented in Table 5. Sodium lignosulfonate powder was used as a plasticizer.

Crushed dolomite stone and dolomite sand were used as aggregates. The specific gravity of the aggregates was 2860 kg/m³. The coarse aggregate had a maximum size of 9.5 mm. The fineness modulus of the sand was 3.86 with 9% passing the 75 µm sieve.

### 6.2. Preparation of dry powder AAS cements

The dry powder AAS cement was produced by grinding together slag, sodium carbonate, accelerating admixture and plasticizer in a laboratory steel ball mill. Compositions of the cements produced are shown in Table 6. The duration of milling was 3h30min and 4h30min to produce dry powder AAS cement with Blaine finenesses in the region of 390 m²/kg and 430 m²/kg, respectively. Fineness of the cement was measured with a Blaine apparatus according to BS EN 196-6:2010 (2010) [10]. A Malvern Mastersizer 2000 apparatus was used to determine a particle size distribution of the dry powder AAS cements.

**Table 6: AAS cement compositions of the present invention**

| Cement ID | Components, wt. % | | | |
|---|---|---|---|---|
| | Slag | Silica fume | Slaked lime | Activator (Na₂O eq. of slag mass) |
| SC35-390 | 100 | | | 3.5 |
| SC40-390 | 100 | | | 4.0 |
| SC45-390 | 100 | | | 4.5 |
| SC35-430 | 100 | | | 3.5 |
| SC40-430 | 100 | | | 4.0 |
| SC45-430 | 100 | | | 4.5 |
| SF2-500 | 98 | 1 | 1 | 4.5 |
| SF6-590 | 94 | 3 | 3 | 4.5 |
| SF10-570 | 90 | 5 | 5 | 4.5 |
| SF6-610 | 94 | 3 | 3 | 4.5 |
| SF6L-620^{(a)} | 94 | 3 | 3 | 4.5 |

| | | | | |
|---|---|---|---|---|
| ^{(a)} AAS cement contains sodium lingosulfonate plasticizer at 1.5 wt. % of slag mass. | | | | |

### 6.3. Production of AAS concrete

During the second stage of this example, AAS concrete was produced. The binder (slag, silica fume and slaked lime) content was kept constant at 500 kg per cubic meter. Thus, the total AAS cement content with activator concentrations of 3.5, 4.0 and 4.5% Na₂O was 530, 534 and 538 kg/m³, respectively. The binder content was chosen based on the following factors:
- Good workability at low water/binder ratio due to a substantial amount of AAS paste. Workability cannot be increased simply by adding water because it will reduce the pH of the system due to the diluting effect and will significantly impair the technical properties of AAS concrete;
- Durability of AAS concrete increases with increased binder content; and
- Optimal compressive strength of AAS concrete is achieved at about 25% binder content by volume.

The coarse to fine aggregate ratio of 65:35 was kept constant in all mixes. The water/binder ratio was 0.30 or 0.35. Concrete mix designs are shown in Table 7.

**Table 7: AAS concrete mix designs and workability according to the present invention**

| Concrete ID | Components, kg/m³ | | | | | Slump, mm/Vebe, sec |
|---|---|---|---|---|---|---|
| | Cement | Stone | Sand | Water | Water/Binder ratio | |
| SC35-390 | 530 | 1189 | 646 | 175 | 0.35 | 30/- |
| SC40-390 | 534 | 1186 | 645 | 175 | 0.35 | 30/- |
| SC45-390 | 538 | 1182 | 643 | 175 | 0.35 | 35/- |
| SC45-390 aged | 538 | 1182 | 643 | 175 | 0.35 | 10/- |
| SC35-390 | 530 | 1235 | 672 | 150 | 0.30 | -/6 |
| SC40-390 | 534 | 1232 | 670 | 150 | 0.30 | -/7 |
| SC45-390 | 538 | 1229 | 668 | 150 | 0.30 | -/5 |
| SC35-430 | 530 | 1235 | 672 | 150 | 0.30 | -/13 |
| SC40-430 | 534 | 1232 | 670 | 150 | 0.30 | -/11 |
| SC45-430 | 538 | 1229 | 668 | 150 | 0.30 | -/10 |
| SF2-500 | 538 | 1181 | 641 | 175 | 0.35 | -/16 |
| SF6-590 | 538 | 1178 | 639 | 175 | 0.35 | -/18 |
| SF10-570 | 538 | 1168 | 634 | 175 | 0.35 | -/17 |
| SF6-610 | 538 | 1178 | 639 | 175 | 0.35 | -/18 |
| SF6L-620 | 538 | 1178 | 639 | 175 | 0.35 | -/10 |

The concrete preparation procedure consisted of the mixing dry aggregates with dry powder AAS cement in a pan mixer, the addition of water, and further mixing until a homogeneous fresh concrete mix was produced. After workability testing, the fresh concrete was immediately placed in 100 mm plastic cube moulds and vibrated. Two initial curing regimes were used: 25°C at >90% relative humidity and steaming at 85°C. Steamed samples were pre-cured at 25°C for two hours and then placed into steam baths. The temperature was increased to 85°C at a rate of 10°C/hour, with the total duration of steam curing of 16 hours. No gradual cooling was used, and samples were de-moulded immediately after steaming. After de-moulding, the samples were stored in a room at 25°C and 55% relative humidity up to the day of testing.

### 6.4. Testing methods

AAS cement setting times were measured according to BS EN 196-3:2005, (2005) [11] using a Vicate apparatus. Water/binder ratio was kept constant at 0.25 as the procedure of a standard paste consistency, normally used for OPC cements (BSI, 2005) [11], would influence the sodium carbonate/water ratio in the AAS pastes, changing the ionic and anionic concentration of the liquid media. Scanning Electron Microscope (SEM) investigations of AAS cement were done with a Zeiss Ultra Plus SEM at 1 kV. Sticky carbon tape was submerged into AAS cement; glued cement particles were coated with carbon. Workability (*slump, Vebe test*) of AAS concrete mixes was tested following the standard procedure of BS EN 12350:2009, (2009a) [12]. Concrete samples were tested for compressive strength using 100 mm cubes according to BS EN 12390-3:2009, (2009b) [13] at 1, (2 days if strength at day 1 was not enough for samples to be de-moulded), 28 and 91 days.

To estimate the shelf life of dry powder AAS cement, the AAS cement SC45-390 was aged in an opened bag at about 25°C and 99% humidity for 9 weeks after manufacturing. Cement, generally would not be stored in such conditions, but 99% humidity was used to intensify the ageing process thus evaluating the performance of the cement if it would be stored for a long time (to replicate a worst case scenario). After ageing, it was studied in the SEM to determine any differences in particle morphology in comparison to the fresh AAS cement.

### 7. Results and discussion

### 7.1. Fineness of AAS cements

The fineness of dry powder AAS cement varied, depending on milling time and the composition of the cement as indicated in Table 8. AAS cement containing only slag and sodium carbonate was divided into two groups, cements with Blaine fineness values of about 390 m²/kg and of about 430 m²/kg. Higher fineness values were found in AAS cement containing silica fume and slaked lime. This increase in fineness could be explained by the softness and high initial specific surface area of slaked lime and silica fume.

The Blaine fineness of AAS cement containing silica fume and slaked lime varied between 504 and 624 m²/kg depending on milling time, amount of the admixture and presence of the plasticizer. The addition of sodium lignosulfonate resulted in an increase in specific surface area of AAS cement from 606 to 624 m²/kg (Table 8), but this change is not deemed to be significant.

**Table 8: AAS cements fineness and setting times according to the present invention**

| Cement ID | Time of milling, min | Particle size range, µm | d₁₀, µm | d₅₀, µm | Blaine, m²/kg | Initial set, h:min | Final set, h:min |
|---|---|---|---|---|---|---|---|
| SC35-390 | 210 | 0.3-168 | 2.3 | 20.5 | 372 | 1:05 | 2:10 |
| SC40-390 | 210 | 0.3-168 | 2.4 | 21.7 | 393 | - | - |
| SC45-390 | 210 | 0.3-168 | 2.2 | 21.5 | 387 | 0:50 | 2:15 |
| SC45-390 aged | 210 | 0.3-168 | 2.2 | 21.5 | 387 | 3:10 | 6:35 |
| SC35-430 | 270 | 0.3-138 | 1.5 | 17.6 | 435 | - | - |
| SC40-430 | 270 | 0.4-138 | 1.9 | 18.4 | 434 | - | - |
| SC45-430 | 270 | 0.4-125 | 1.7 | 17.5 | 435 | 0:45 | 1:05 |
| SF2-500 | 210 | 0.4-138 | 1.8 | 20.1 | 504 | 0:50 | 2:00 |
| SF6-590 | 210 | 0.4-138 | 1.5 | 19.3 | 589 | 0:45 | 2:45 |
| SF10-570 | 210 | 0.4-168 | 1.5 | 19.9 | 573 | 1:00 | 2:55 |
| SF6-610 | 270 | 0.4-138 | 1.6 | 19.4 | 606 | 0:30 | 1:40 |
| SF10L-620 | 270 | 0.4-152 | 1.3 | 17.3 | 624 | 3:45 | 8:30 |

### 7.2. Setting times of AAS cements

Setting times of the AAS cement are presented in Table 8. Increase in alkali content (from SC35-390 to SC45-390) and fineness (from SC45-390 to SC45-430; and from SF6-590 to SF6-610) shorten initial setting time. Final setting time seems to be sensitive to fineness of the AAS cement, with significantly shorter final setting times recorded with an increase in fineness.

The addition of silica fume and slaked lime does not influence the initial setting time but delays final setting (SF6-590 compared to SC45-390, Table 8). The plasticizer not only decreases water demand of dry powder AAS cement but also prolongs setting times (SF6-610 compared to SF6L-620, Table 8). It is well-known that plasticizers act as retarders with OPC. Very often, the influence of plasticizers on OPC setting times is seen as a negative effect and accelerators are used in some cases to shorten setting time. This side-effect of using plasticizers can however be very useful and important for producing dry powder AAS cement because setting times of this cement is critical due to possible fast setting, especially with increasing fineness.

Ageing of AAS cement SC45-390 significantly delays both initial and final setting times. The delay is most probably caused by the formation of a crust of hydration products (see next section) on slag particles which act as a barrier between slag particles and water (activator solution, after dissolution of sodium carbonate contained in the AAS cements) decelerating hydration of the AAS cement.

### 7.3. SEM observation of AAS cement

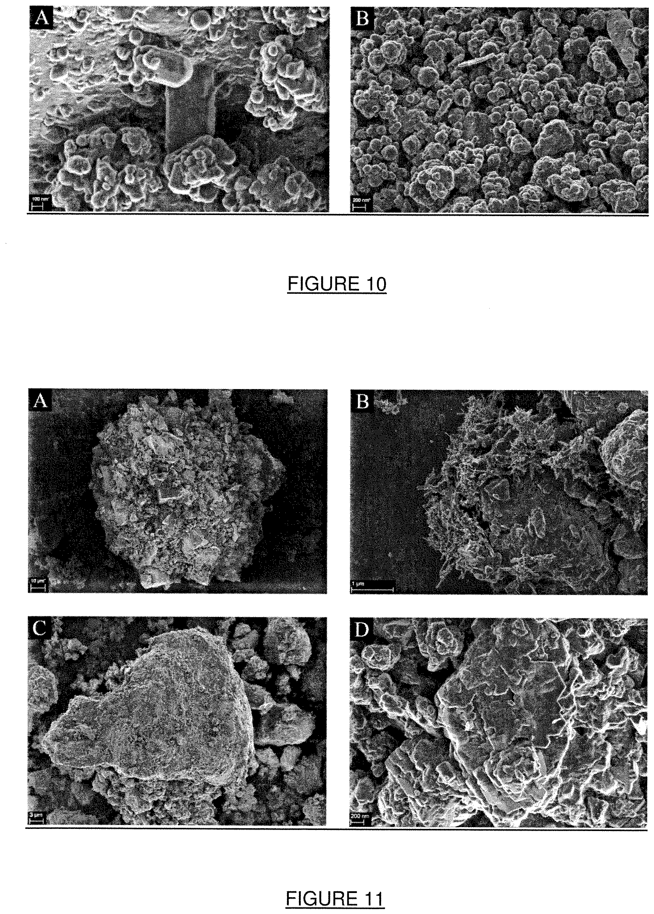

Figure 10 shows SEM images of the AAS cement containing the accelerating admixture (SF6-610). Silica fume particles and slaked lime crystals can be observed on the surface of a slag particle (Figure 10A). As can be seen, inter-grinding provides close contact between slag, slaked lime, and silica fume particles which is important for early and long-term hydration because the early hydration process of AAS cement occurs through nucleation and growth mechanisms, while the long-term reaction may continue through partially solid state mechanisms. In both cases, close contact between the particles should facilitate the hydration process.

It can also be seen that some particles went through possible amorphization induced by the milling process (Figure 10B). At this stage it is virtually impossible to use Energy Dispersive Spectroscopy (EDS) analysis to determine the chemical composition of the formations due to the relatively deep penetration of the electron beam into the sample, even at low acceleration voltage.

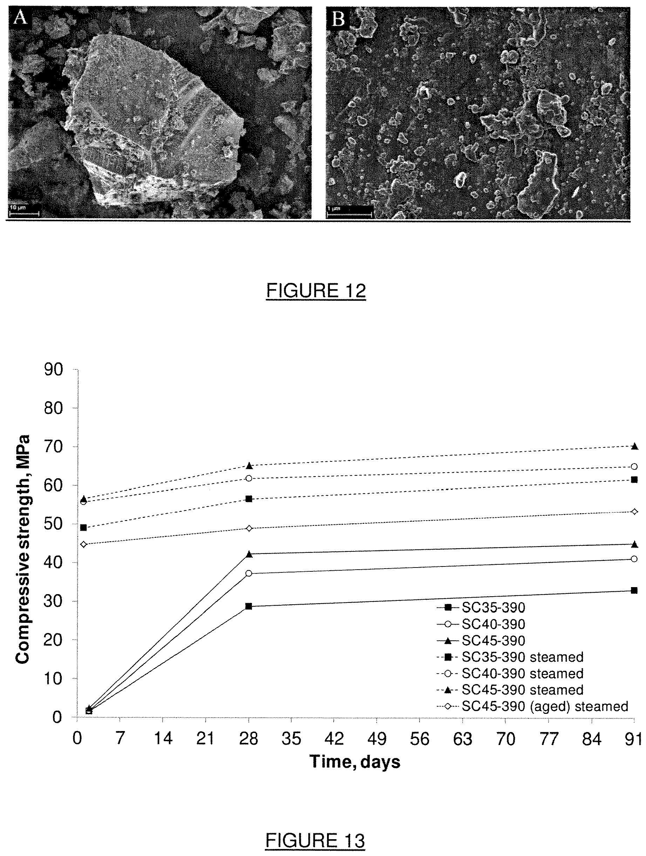

Investigation of aged AAS cement with SEM showed that conglomerates of the cement particles were formed (Figure 11A), and some reaction induced by water vapours in the fog room, took place (Figure 11B to Figure 11D). The fresh AAS cement does not form the conglomerates (Figure 12A) or large amounts of reaction products (Figure 12B) similar to that which covers particles of the aged AAS cement (Figure 11C to Figure 11D). These products effectively increase the surface area of the aged AAS cement and form a barrier between water and the unreacted part of the slag. The increased surface area of the aged AAS cement increases water demand of the cement and, as a result, decreases workability of AAS concrete (see next discussion). The layer of hydration products could also be one of the reasons for decelerated hydration of aged AAS cement which resulted in delayed setting times (Table 8).

### 7.4. Workability of AAS concretes

Workability of AAS concretes (as measured with Vebe and slump tests) was low as is indicated in Table 7. AAS concrete containing SC45-390 had a slump of 35 mm while workability of concrete containing aged SC45-390 cement was 10 mm slump. The reduction in workability could be caused by the increase in surface area of cement due to the formation of hydration products during the ageing procedure (Figure 11D). AAS concrete containing SF6-610 and SF6L-620 cement had Vebe workability of 18 and 10 seconds, respectively. Sodium lignosulfonate increased workability of the AAS concrete indicating that water demand of the dry powder AAS cement SF6L-620 was reduced which is critical in AAS concrete technology.

The AAS concrete could be produced at lower water/binder ratios. High water/binder ratios impair strength development of AAS concrete by increasing porosity of the concrete due to the increase in water content. The increase in water/binder ratio also changes the ionic and anionic concentration of the alkaline solution due to the effect of diluting and, as a result, the pH of the solution decreases as the amount of alkali in the AAS cement is fixed. Reduced pH would significantly decelerate strength development of AAS cement at early age. It is even more critical for sodium carbonate as the initial pH of its aqueous solution is relatively low in comparison to most activators usually used in AAS concrete production. As a result of reduced pH, initial hydration and early strength could be significantly impaired by the additional water introduced at high water/binder ratios.

### 7.5. Compressive strength

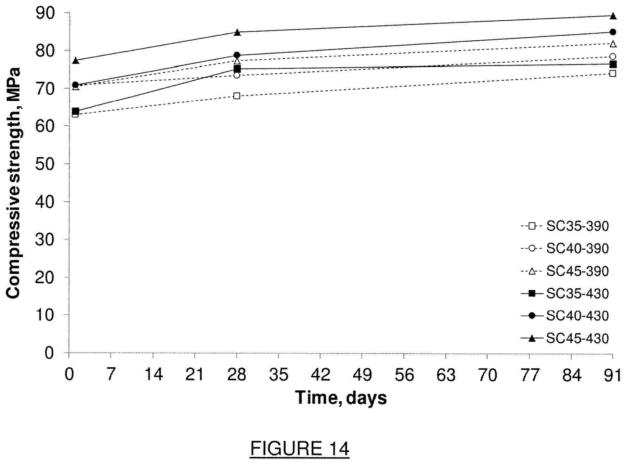

Strength development of the dry powder AAS cement is sensitive to activator content, especially when AAS concrete is cured at ambient temperature. An increase in activator content from 3.5 to 4.5% Na₂O results in a 47% increase in compressive strength at 28 days from 29 to 42 MPa (Figure 13). The sensitivity of the strength development to activator content is significantly reduced if AAS concrete is steamed. Only 16% difference in compressive strength at 28 days can be observed between AAS concrete containing 3.5 and 4.5% Na₂O (Figure 13). The difference in strength drops even further to 14% when the water/binder ratio is reduced from 0.35 to 0.30 and to 13% for cement with increased fineness (Figure 14).

Results presented in Figure 13 also show that the strength development of concrete containing the dry powder AAS cement made from neutral BFS and sodium carbonate is slow at ambient temperature. Samples could not be de-moulded after 1 day and strength testing was carried out after 2 days. Notwithstanding this, hydration progresses with time providing reasonable strengths at 28 days (Figure 13). Increased curing temperature significantly improves AAS concrete performance by accelerating strength development, especially at an early age (Figure 13 and 14). Compressive strengths in the range from 57 to 65 MPa were obtained at 28 days depending on the alkali concentration. More than 50% increase in strength can be achieved by steam curing of the AAS concrete (Figure 13).

As mentioned above, it is interesting to note that the relative strength difference between concrete containing AAS cement with different concentrations of sodium carbonate decreases significantly with heat treatment. The AAS cement is more sensitive to activator content when hardening at ambient temperatures. The best concentration of the activator in terms of compressive strength gained by AAS concrete will thus depend on the application of AAS cement, i.e. the cement for precast production can be produced with lower activator content which will reduce the cost of AAS cement and reduce the possibility of efflorescence formation on the surfaces of concrete products.

A reduction in water content leads to a significant increase in compressive strength of AAS concrete containing binders of the 390 series (Figure 14 compared to Figure 13); with more than 25% strength increase immediately after steaming and about 20% at 28 days. This is a big advantage of dry powder AAS cement over traditional AAS technology, where the alkali is introduced into the concrete mixture as an aqueous solution. The amount of alkaline solution cannot be reduced to a comparative extent because it will reduce the alkali concentration in AAS concrete due to a limit of sodium carbonate solubility in water at a certain temperature. This advantage increases the flexibility of AAS concrete containing dry powder AAS cement: the concrete can be designed to have the same strength properties with increased workability or to have higher strength performance with the same workability of fresh concrete mix, in comparison to traditional AAS concrete.

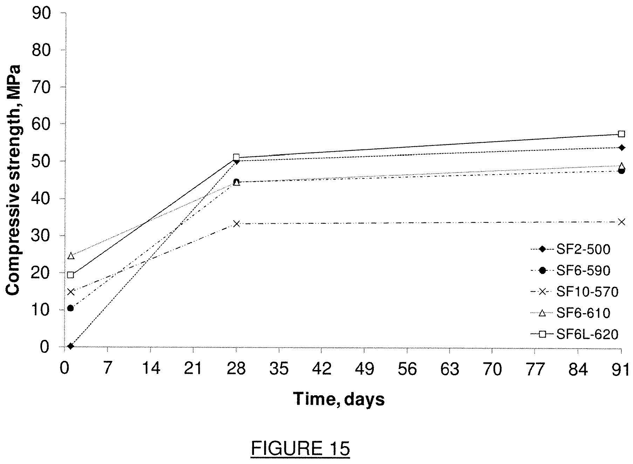

Increased fineness of dry powder AAS cement improved the compressive strength of AAS concrete by only 7-10% at 28 days (Figure 14). The increase is even less at 91 days, varying between 0 and 9%. AAS concrete containing SF3-590 and SF3-610 have almost no difference in compressive strength at 28 and 91 days (Figure 15), though initial strength at 1 day differs substantially.

As shown in Figure 13, heat treatment is essential for strength development of AAS cement containing the neutral GBFS and sodium carbonate. Heat treatment very often cannot be done on a construction site. To accelerate hardening of dry powder AAS cement at ambient temperatures, a combination of silica fume with slaked lime was used (Figure 15). It can be seen that the optimum amount of the accelerating admixture was 6 weight %. Although 2 weight % concentration of the admixture provides the highest strength in the long term, it does not accelerate strength development at early age enough to be practical.

In contrast 10 weight % concentration of combined silica fume and slaked lime effectively accelerates strength development at an early age but the long-term compressive strength is significantly impaired. As opposed to 2 and 10 weight % dosage, 6 weight % of the accelerating admixture gives a good balance between early and long-term compressive strength for AAS concretes (Figure 15).

The compressive strength of AAS concretes increases from 2.5 MPa at 2 days for SC45-390 to 10.3 MPa at 1 day for SF6-590 (Figure 13 compared to Figure 15). The effectiveness of the accelerating admixture goes up even more with increasing fineness of AAS cement as illustrated by the fact that AAS concrete containing SF6-610 gained 24.5 MPa in compressive strength in 1 day (Figure 15). Accelerated strength development can be explained by the increase in pH upon dissolution of the slaked lime and by C-S-H formed during rapid reaction between silica fume and slaked lime. The C-S-H acts as crystallization centres (substrate) for new portions of C-S-H produced by the promoted slag hydration. The acceleration could also be explained by the reaction of slaked lime with sodium carbonate, resulting in the formation of sodium hydroxide that increases early-age compressive strength, but this reaction is not possible at 25°C (Gibbs energy is 55,8 kJ/mol).

The addition of sodium lignosulfonate significantly increased the compressive strength of dry powder AAS cement with the accelerating admixture at the same water/binder ratio (Figure 15). This phenomenon could be explained by the improved structure of the hydration product caused by a slower hydration process during the initial stage of hardening and by a possible reaction between slag and the additional sodium brought into the system with the plasticizer.

After the ageing procedure, dry powder AAS cement SC45-390 was used to produce concrete with a compressive strength of 49 MPa after 28 days (Figure 13) in comparison to the strength of AAS concrete containing fresh AAS cement SC45-390 which yielded 65 MPa after 28 days. A loss of less than 25% in compressive strength during storage in extreme conditions (99% relative humidity) for two months could be a good indicator of sufficient shelf life for the dry powder AAS cement.

### 8. Conclusion

In view of the foregoing, the following conclusions can be drawn.

Sodium carbonate concentration in dry powder AAS cement can be varied depending on the cement application. The optimum concentration is 3.5% Na₂O for precast production with steam curing. Fore cast in-situ application and curing at ambient temperatures, 4.5% Na₂O should be considered the optimum.

Heat curing is essential for strength development of dry powder AAS cements containing neutral GBFS and sodium carbonate but these cements can also be used for in-situ applications where early strength is not critical.

Combinations of silica fume and slaked lime accelerate strength development of dry powder AAS cement containing neutral GBFS and sodium carbonate to the extent that they can be used for in-situ applications without special heat treatment on construction sites. For formulation of dry powder AAS cements, 6 weight % of the accelerating admixture can be recommended.

The addition of sodium lignosulfonate not only reduces water demand, but also prolongs setting times and increases strength performance of dry powder AAS cements. Potentially, dry powder AAS cements have a sufficient shelf life but long-term testing is required to confirm that.

Whilst only certain embodiments or examples of the instant invention have been shown in the above description, it will be readily understood by a person skilled in the art that other modifications and/or variations of the invention are possible.

### REFERENCES

1. E. Douglas, J. Brandstetr, A preliminary study on the alkali activation of ground granulated blast-furnace slag, Cem. Concr. Res. 20 (1990) 746-756.
2. British Standards Institution, BS EN 12390-3:2009 Testing hardened concrete - Part (3) Compressive strength of test specimens, British Standards, UK, 2009.
3. R.S. Barneyback, S. Diamond, Expression and analysis of pore fluids from hardened cement pastes and mortars, Cem. Concr. Res. 11 (1981) 279-285
4. F. Poertas, A. Fernández-Jiménez, M.T. Blanco-Valera, Pore solution in alkali-activated slag cement pastes. Relation to the composition and structure of calcium silicate hydrate, Cem. Concr. Res. 34 (2004) 139-148.
5. S. Song, H.M. Jennings, Pore solution chemistry of alkali-activated ground granulated blast-furnace slag, Cem. Concr. Res. 29 (1999) 159-170.
6. I.G. Richardson, G.W. Groves, Microstructure and microanalysis of hardened cement pastes involving ground granulated blast-furnace slag, J. Mater. Sci. 27 (22) (1992) 6204-6212.
7. S.D. Wang, K.L. Scrivener, Hydration products of alkali activated slag cement, Cem. Concr. Res. 25 (3) (1995) 561-571.
8. S.D. Wang, K.L. Scrivener, 29Si and 27Al NMR study of alkali-activated slag, Cem. Concr. Res. 33 (2003) 769-774.BSI (2010).
9. S.D. Wang, K.L. Scrivener, Hydration products of alkali activated slag cement, Cem. Concr. Res. 25 (3) (1995) 561-571.
10. BS EN 196-6:2010. Methods of testing cement - Part 6: Determination of fineness. BSI, London, UK.
11. BSI (2005) BS EN 196-3:2005. Methods of testing cement - Part 3: Determination of setting times and soundness. BSI, London, UK.
12. BSI (2009a) BS EN 12350:2009. Testing fresh concrete. BSI, London, UK.
13. BSI (2009b) BS EN 12390-3:2009. Testing hardened concrete - Part 3: Compressive strength of test specimens. BSI, London, UK.

## Claims

1. An alkaline-activated slag composition, wherein the composition includes:
a source of slag;
a source of an alkali metal carbonate comprising 0.5 to 6.0 in the metal oxide equivalent (i.e. Na₂O for Na₂CO₃) weight % of the source of slag;
a silica fume comprising 0.5 to 5 weight % of the source of slag; and
a slaked lime comprising 0.5 to 5.0 weight % of the source of slag.

2. The composition as claimed in claim 1, wherein the composition includes a plasticizer.

3. The composition as claimed in claim 2, wherein the plasticizer is in the form of a non-aqueous plasticizer.

4. The composition as claimed in claim 2, wherein the plasticizer is sodium lignosulfonate.

5. The composition as claimed in claim 4, wherein the sodium lignosulfonate comprises 0.1 to 3.0 weight % of the source of slag.

6. The composition as claimed in claim 1, wherein the source of slag is a blast-furnace slag (BFS).

7. The composition as claimed in claim 6, wherein the slag has a basicity coefficient (K_{b}=(CaO+MgO)/(SiO₂+Al₂O₃)) of 0.92, an activity coefficient (Kₐ=Al₂O₃/SiO₂) of 0.41 and a quality coefficient (K_{q}=(CaO+Al₂O₃+MgO)/(SiO₂+TiO₂)) of 1.67.

8. The composition as claimed in claim 7, wherein the coefficients indicate that the source of slag is a neutral BFS having a high reactivity.

9. A process for the preparation of a dry mixed alkaline-activated slag composition according to claim 1, wherein the process includes:
(i) providing a source of a non-aqueous slag;
(ii) providing a source of a non-aqueous alkali metal carbonate;
(iii) providing silica fume;
(iv) providing slaked lime; and
(v) mixing together the source of non-aqueous slag, the source of non-aqueous alkali metal carbonate, the silica fume and slaked lime, in any order of addition, to form the dry mixed alkaline-activated slag composition.

10. The process as claimed in claim 9, wherein an additional step of providing a source of a non-aqueous plasticizer is included.

11. The process as claimed in claim 9, wherein the source of the non-aqueous plasticizer is in the form of sodium lignosulfonate.

12. The process as claimed in claim 11, wherein the sodium lignosulfonate comprises 0.1 to 3.0 weight % of the source of slag.

13. The process as claimed in claim 9, wherein the source of the non-aqueous slag for the process is a blast-furnace slag (BFS).

14. The process as claimed in claim 13, wherein the quality coefficient (K_{q}=(CaO+Al₂₀₃+MgO)/(SiO₂+TiO₂)) is 1.67.

15. The use of the alkaline-activated slag composition, according to any one of claims 1 to 8, in the manufacture of concrete or mortar.

## Patentansprüche

1. Alkalisch aktivierte Schlackenzusammensetzung, wobei die Zusammensetzung aufweist:
eine Schlackenquelle;
eine Alkalimetallcarbonatquelle in einem Anteil von 0,5 bis 6,0 Gew.-% Metalloxidäquivalent (d.h. Na₂O für Na₂C0₃) der Schlackenquelle;
Mikrosilika in einem Anteil von 0,5 bis 5 Gew.-% der Schlackenquelle;
und
gelöschten Kalk in einem Anteil von 0,5 bis 5,0 Gew.-% der Schlackenquelle.

2. Zusammensetzung nach Anspruch 1, wobei die Zusammensetzung einen Weichmacher enthält.

3. Zusammensetzung nach Anspruch 2, wobei der Weichmacher in der Form eines nicht-wässrigen Weichmachers vorliegt.

4. Zusammensetzung nach Anspruch 2, wobei der Weichmacher Natriumlignosulfonat ist.

5. Zusammensetzung nach Anspruch 4, wobei das Natriumlignosulfonat in einem Anteil von 0,1 bis 3,0 Gew.-% der Schlackenquelle vorliegt.

6. Zusammensetzung nach Anspruch 1, wobei die Schlackenquelle Hochofenschlacke (BFS) ist.

7. Zusammensetzung nach Anspruch 6, wobei die Schlacke einen Basizitätskoeffizienten (K_{b}=(CaO+MgO)/(SiO₂+Al₂O₃)) von 0,92, einen Aktivitätskoeffizienten (Kₐ = Al₂O₃/SiO₂) von 0,41 und einen Qualitätskoeffizienten (K_{q}=(CaO+Al₂O₃+MgO)/(SiO₂+TiO₂) von 1,67 aufweist.

8. Zusammensetzung nach Anspruch 7, wobei die Koeffizienten anzeigen, dass die Schlackenquelle neutrale BFS mit einem hohen Reaktionsvermögen ist.

9. Verfahren zum Herstellen einer trocken gemischten alkalisch aktivierten Schlackenzusammensetzung nach Anspruch 1, wobei das Verfahren die Schritte aufweist:
(i) Bereitstellen einer Quelle für eine nicht-wässrige Schlacke;
(ii) Bereitstellen einer Quelle für ein nicht-wässriges Alkalimetallcarbonat;
(iii) Bereitstellen von Mikrosilika;
(iv) Bereitstellen von gelöschtem Kalk; und
(v) Mischen der Quelle für eine nicht-wässrige Schlacke, der Quelle für ein nicht-wässriges Alkalimetallcarbonat, des Mikrosilika und des gelöschten Kalks miteinander in einer beliebigen Zugabefolge, um die trocken gemischte alkalisch aktivierte Schlackenzusammensetzung herzustellen.

10. Verfahren nach Anspruch 9, wobei ein zusätzlicher Schritt zum Bereitstellen einer Quelle für einen nicht-wässrigen Weichmacher vorgesehen ist.

11. Verfahren nach Anspruch 9, wobei die Quelle für den nicht-wässrigen Weichmacher in der Form von Natriumlignosulfonat vorliegt.

12. Verfahren nach Anspruch 11, wobei das Natriumlignosulfonat in einem Anteil von 0,1 bis 3,0 Gew.-% der Schlackenquelle vorliegt.

13. Verfahren nach Anspruch 9, wobei die Quelle für die nicht-wässrige Schlacke für das Verfahren Hochofenschlacke (BFS) ist.

14. Verfahren nach Anspruch 13, wobei der Qualitätskoeffizient (K_{q}=(CaO+Al₂O₃+MgO)/(SiO₂+TiO₂) 1,67 beträgt.

15. Verwendung der alkalisch aktivierten Schlackenzusammensetzung nach einem der Ansprüche 1 bis 8 für die Herstellung von Beton oder Mörtel.

## Revendications

1. Composition de laitier à activation alcaline, où la composition comprend :
une source de laitier ;
une source d'un carbonate de métal alcalin compris à raison de 0,5 à 6,0 % en poids en équivalent d'oxyde métallique (par exemple, Na₂O pour Na₂CO₃) de la source de laitier ;
une fumée de silice comprise à raison de 0,5 à 5 % en poids de la source de laitier ;
et
une chaux éteinte comprise à raison de 0,5 à 5,0 % de la source de laitier.

2. Composition selon la revendication 1, où la composition comprend un plastifiant.

3. Composition selon la revendication 2, dans laquelle le plastifiant est sous la forme d'un plastifiant non aqueux.

4. Composition selon la revendication 2, dans laquelle le plastifiant est du lignosulfonate de sodium.

5. Composition selon la revendication 4, dans laquelle le lignosulfonate de sodium est compris à raison de 0,1 à 3,0 % en poids de la source de laitier.

6. Composition selon la revendication 2, dans laquelle la source de laitier est un laitier de haut fourneau (BFS).

7. Composition selon la revendication 6, dans laquelle le laitier a un coefficient de basicité (K_{b} = (CaO + MgO) / (SiO₂ + Al₂O₃)) de 0,92, un coefficient d'activité (Kₐ = Al₂O₃ / SiO₂) de 0,41 et un coefficient de qualité (K_{q} = (CaO + Al₂O₃ + MgO) / (SiO₂ + TiO₂)) de 1,67.

8. Composition selon la revendication 7, dans laquelle les coefficients indiquent que la source de laitier est un laitier de haut fourneau neutre ayant une réactivité élevée.

9. Procédé de préparation d'une composition de laitier à activation alcaline mélangé selon la revendication 1, où le procédé comprend :
(i) la fourniture d'une source de laitier non aqueux ;
(ii) la fourniture d'une source d'un carbonate de métal alcalin non aqueux ;
(iii) la fourniture de fumée de silice ;
(iv) la fourniture de chaux éteinte ; et
(v) le mélange de la source de laitier non aqueux, de la source de carbonate de métal alcalin non aqueux, de la fumée de silice et de la chaux éteinte, dans n'importe quel ordre d'addition afin de former la composition de laitier à activation alcaline mélangé.

10. Procédé selon la revendication 9, dans lequel une étape supplémentaire de fourniture d'une source de plastifiant non aqueux est incluse.

11. Procédé selon la revendication 9, dans lequel la source de plastifiant non aqueux est sous la forme de lignosulfonate de sodium.

12. Procédé selon la revendication 11, dans lequel le lignosulfonate de sodium est compris à raison de 0,1 à 3,0 % en poids de la source de laitier.

13. Procédé selon la revendication 9, dans lequel la source du laitier non aqueux pour le procédé est un laitier de haut fourneau (BFS).

14. Procédé selon la revendication 13, dans lequel le coefficient de qualité (K_{q} = (CaO + Al₂O₃ + MgO) / (SiO₂ + TiO₂)) est de 1,67.

15. Utilisation de la composition de laitier à activation alcaline selon l'une quelconque des revendications 1 à 8 dans la fabrication de ciment et de mortier.
